(19) Europäisches Patentamt
European Patent Office
Office européen des brevets

(11) **EP 0 617 296 B1**

(12) **FASCICULE DE BREVET EUROPEEN**

(45) Date de publication et mention de la délivrance du brevet:
**22.04.1998 Bulletin 1998/17**

(51) Int Cl.6: **G01S 11/12**, G01S 17/88

(21) Numéro de dépôt: **94400449.8**

(22) Date de dépôt: **03.03.1994**

(54) **Procédé et dispositif de détection d'obstacles, embarqué sur un véhicule automobile**

An einem Automobil montierte Vorrichtung zur Hinderniserkennung und Verfahren dazu

Method and system for obstacle detection, installed on a automotive vehicle

(84) Etats contractants désignés:
DE GB IT

(30) Priorité: **22.03.1993 FR 9303253**

(43) Date de publication de la demande:
**28.09.1994 Bulletin 1994/39**

(73) Titulaires:
- **AUTOMOBILES PEUGEOT**
  **75116 Paris (FR)**
- **AUTOMOBILES CITROEN**
  **92200 Neuilly-sur-Seine (FR)**
- **REGIE NATIONALE DES USINES RENAULT S.A.**
  **92109 Boulogne Billancourt (FR)**

(72) Inventeurs:
- **Devos, Francis**
  **F-91620 La Ville du Bois (FR)**
- **Devars, Jean**
  **F-91140 Villebon Sur Yvette (FR)**
- **Brame, Jean-Luc**
  **F-75014 Paris (FR)**

(74) Mandataire: **Pinchon, Odile et al**
**GIE PSA PEUGEOT CITROEN,**
**Propriété Industrielle - OPS/BPI,**
**18, rue des Fauvelles**
**92256 La Garenne Colombes Cédex (FR)**

(56) Documents cités:
EP-A- 0 522 520          DE-C- 4 114 304
DE-U- 8 717 494          FR-A- 2 576 126
GB-A- 2 139 445

- **COMPUTER VISION GRAPHICS AND IMAGE PROCESSING, vol.21, no.2, Février 1983, DULUTH, MA US pages 222 - 238 COWART ET AL. 'The Detection of Unresolved Targets Using the Hough Transform'**

**Description**

La présente invention se rapporte à un dispositif de détection d'obstacles, embarqué sur un véhicule automobile.

On connaît des systèmes de détection d'obstacles utilisant des capteurs d'images ou caméras, notamment de type CCD (c'est-à-dire "Charge Coupled Device", ou en français : "Dispositif à transfert de charge"). On pourra se référer par exemple au brevet allemand DE 4114304. Cependant, si une caméra permet d'obtenir une image en deux dimensions de la scène routière, elle ne donne pas directement de renseignement concernant la profondeur, c'est-à-dire la distance de l'obstacle au point de prise de vue situé dans le véhicule.

Pour pallier cet inconvénient, on peut utiliser deux caméras et calculer la profondeur par un procédé de stéréovision, mais ce procédé est difficile à mettre en oeuvre. Outre le problème d'épipolarité se pose le problème de mise en correspondance, c'est-à-dire de l'appariement de chaque élément caractéristique de l'image de l'une des deux caméras avec l'élément correspondant de l'image de l'autre caméra. De plus, ce procédé demande, pour être robuste, des capacités de calcul très importantes et est donc mal adapté aux systèmes embarqués. Ces divers problèmes contribuent à un manque de précision et de fiabilité de ce procédé de stéréovision.

La présente invention a pour but un dispositif de détection d'obstacles embarqué sur un véhicule automobile, qui renseigne sur la distance de l'obstacle au véhicule tout en étant précis et fiable.

Plus précisément; le dispositif de détection selon l'invention est destiné à détecter les obstacles coupant un plan P sensiblement parallèle au plancher du véhicule et passant par ce véhicule, ce dispositif comportant un capteur d'images constitué d'un objectif, d'un capteur matriciel sur lequel se forme une image, et des moyens de traitement électronique de l'image couplés à des moyens d'information du conducteur du véhicule, caractérisé en ce que le capteur matriciel est situé dans un plan sensiblement perpendiculaire au plan P et au plan de symétrie du véhicule, l'objectif est constitué d'une lentille cylindrique ou d'une portion de lentille cylindrique dont l'axe est parallèle au plan du capteur matriciel et incliné par rapport au plan de symétrie du véhicule, ce capteur d'images étant placé dans le véhicule de façon que son champ se superpose au plan P, et les moyens de traitement de l'image sont arrangés pour définir dans un repère lié au plan P, les coordonnées de chaque point d'intersection de ces obstacles avec le plan P.

Selon une variante, la lentille cylindrique est remplacée par une superposition de lentilles ou de portions de lentilles sphériques décalées les unes par rapport aux autres de sorte que leurs centres optiques soient sur un même axe parallèle au plan du capteur matriciel mais incliné par rapport à celui-ci.

Les coordonnées $\theta$, z et leurs barres d'incertitude sont déterminées par les relations suivantes :

$$tg\ \theta = \frac{\delta}{d}\left(i + \frac{1}{2}\right) \pm \frac{1}{2}\frac{\delta}{d}$$

$$z = \frac{ad}{\delta \cdot}\left(\frac{\Delta i}{\Delta i^2 - 1} \pm \frac{1}{\Delta i^2 - 1}\right)$$

où:

- $\delta$ est la résolution du capteur matriciel
- d est la distance entre l'objectif et le capteur matriciel
- a est la distance entre les projections, sur le plan P, des centres optiques extrêmes de l'objectif
- i est l'abscisse de l'intersection avec la première ligne de la matrice du capteur matriciel, du segment de droite qui constitue l'image du point dont les coordonnées sont recherchées, ce segment étant extrait au moyen d'un algorithme de traitement d'image.
- $\Delta i = j - i$, j étant l'abscisse de l'intersection avec la dernière ligne de la matrice du capteur matriciel, du segment de droite qui constitue l'image du point dont les coordonnées sont recherchées, ce segment étant extrait au moyen d'un algorithme de traitement d'image.

L'invention va maintenant être décrite plus en détail, en référence à un mode de réalisation donné à titre d'exemple et représenté par les dessins annexés sur lesquels :

- la figure 1 est un schéma d'implantation du dispositif selon l'invention sur un véhicule,

- la figure 2 est un schéma de principe du dispositif selon l'invention,

- la figure 3 représente les éléments du dispositif selon l'invention,

- la figure 4 représente une variante de la figure 3,

- la figure 5 représente le capteur matriciel des figures 3 et 4,

- la figure 6 représente schématiquement en vue de dessus le dispositif optique des figures 3 et 4,

- la figure 7 représente, en vue agrandie, un détail de la figure 5.

Sur toutes ces figures, les éléments correspondants portent les mêmes repères.

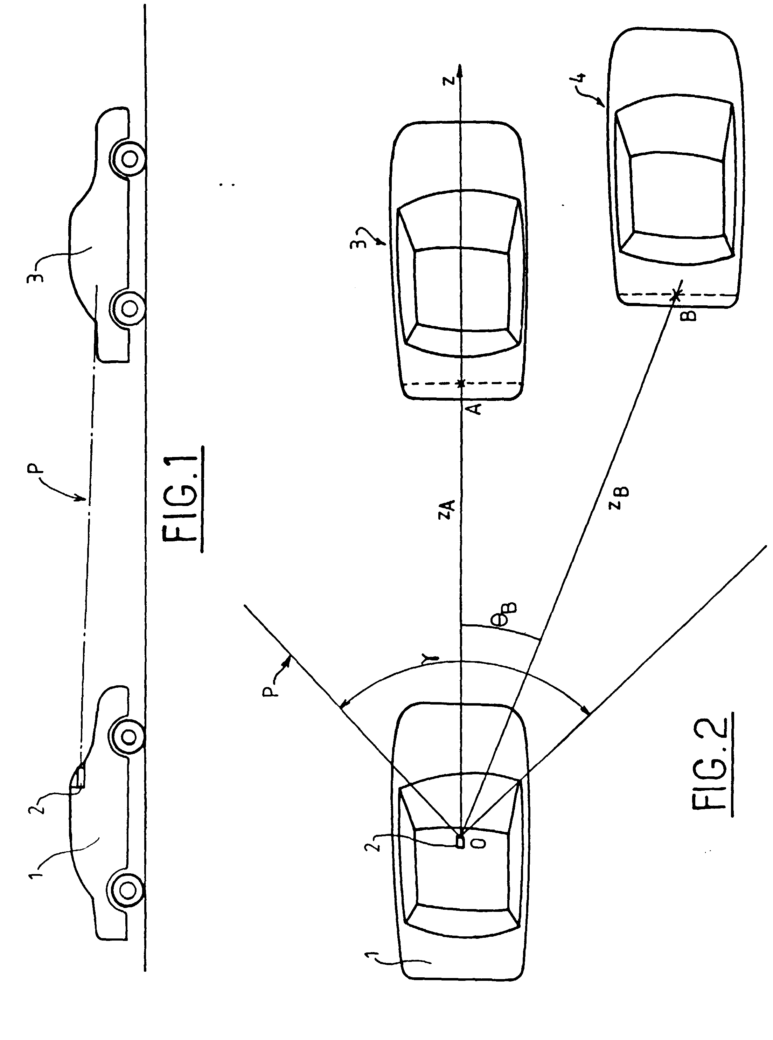

On se reportera tout d'abord à la figure 1. Cette figure montre un véhicule 1 muni d'un capteur d'images 2 selon l'invention. Le capteur 2 est fixé sur la face arrière du rétroviseur intérieur du véhicule et est légèrement incliné vers le bas. Le champ de ce capteur peut être assimilé, comme on l'expliquera plus loin, à un plan P coupant l'obstacle que constitue un véhicule 3 placé devant le véhicule 1.

Si l'on se reporte à la figure 2, on voit que le capteur 2, qui détermine une origine O, couvre dans le plan P, un angle $\gamma$ susceptible de couvrir toute la largeur de la route. Le plan P coupe ici le véhicule 3 de la figure 1, situé sur le même axe longitudinal que le véhicule 1, ainsi qu'un véhicule 4 situé à droite du véhicule A.

Plus précisément, le plan P coupe les véhicules 3 et 4 selon des segments de droite que l'on peut, si ces véhicules sont à une certaine distance du véhicule 1, assimiler à leur milieu, respectivement A et B. Le dispositif selon l'invention permet de déterminer l'angle $\theta$ et la cote z de chaque point A et B dans un repère lié au plan P et ayant pour origine la demi-droite Oz constituée par l'intersection du plan P avec le plan de symétrie du véhicule 1.

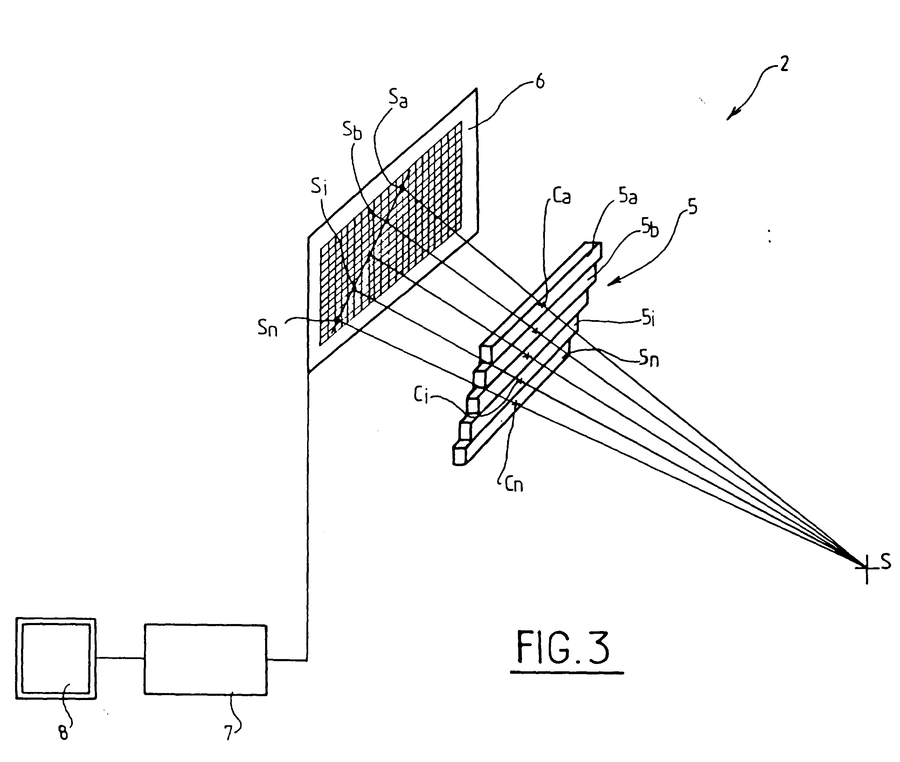

On se reportera maintenant à la figure 3 sur laquelle on a représenté un point source S, qui pourrait être l'un des points A ou B de la figure 2, un objectif 5, un capteur matriciel 6 et des moyens 7 de traitement électronique (par exemple numérisation de l'image puis analyse de l'image numérique ou calcul électronique direct) couplés à des moyens 8 d'information du conducteur pour l'aide à la conduite de celui-ci. Ces moyens 8 peuvent être des moyens visuels, les informations s'affichant par exemple sur un écran de visualisation intégré au poste de conduite et/ou sonores, tels qu'une alarme ou une voix artificielle.

L'objectif 5 est constitué d'une superposition, dans un plan parallèle à celui du capteur 6, donc sensiblement vertical, de portions parallélépipèdiques de lentilles sphériques 5a, 5b,...,5i,...5n décalées les unes par rapport aux autres de sorte que leurs centres optiques $C_a$,...$C_i$,...,$C_n$ soient alignés sur un axe parallèle au plan du capteur matriciel 6 et incliné par rapport au plan de symétrie du véhicule 1. Sur la figure 3, on n'a représenté que 5 portions de lentilles mais on peut en superposer par exemple une vingtaine (n=20).

Le point source S a pour image par rapport à chacune des portions de lentilles 5a à 5n, un point-image $S_a$, $S_b$,...$S_i$...$S_n$. Les centres optiques $C_a$ à $C_n$ étant alignés, les points-images $S_a$ à $S_n$ le sont aussi. Ainsi, l'image sur le capteur 6 du point S est un segment de droite. De même, tous les autres points sources, intersections d'obstacles avec le plan P ont pour image un segment de droite sur le capteur matriciel 6. Les moyens électroniques situés dans le boîtier interprètent ces images afin de déterminer les coordonnées $\theta$ et z de chaque point source. Ces coordonnées sont ensuite portées à la connaissance du conducteur, sous diverses formes, par les moyens 8. L'information concernant ces coordonnées peut être complétée ou remplacée par des informations concernant par exemple la présence ou non d'obstacles, la distance de ces obstacles au véhicule, la vitesse relative de ces obstacles par rapport au véhicule.

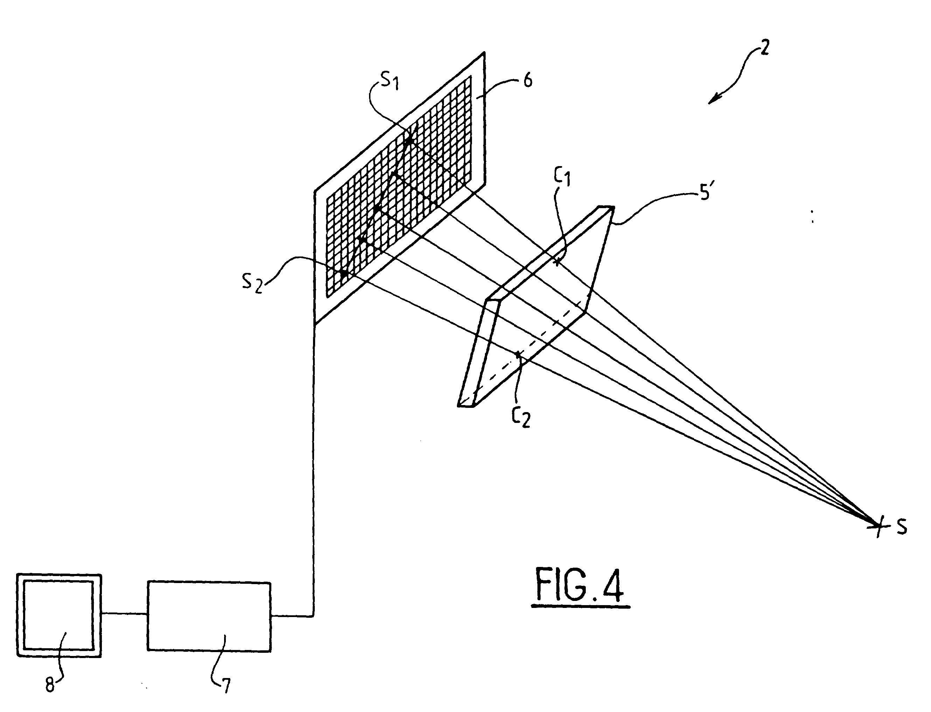

On se reportera maintenant à la figure 4, analogue à la figure 3 mais sur laquelle l'objectif est constitué d'une portion parallélépipédique de lentille cylindrique 5' dont l'axe est parallèle au plan du capteur matriciel 6 et est incliné par rapport au plan de symétrie du véhicule 1. Cette lentille cylindrique est analogue, du point de vue optique, à la superposition de portions de lentilles sphériques de la figure 3. En effet, si l'on suppose les lentilles de la figure 3 suffisamment petites, par un passage à la limite, ces lentilles sont assimilables à une lentille cylindrique. L'axe de la lentille cylindrique 5' est analogue à l'axe sur lequel sont alignés les centres optiques $C_a$ à $C_n$ des portions de lentilles 5a à 5n. On a repéré par $C_1$ et $C_2$ les deux centres optiques extrêmes de la lentille 5'. L'image, sur le capteur 6, du point source S est, comme sur la figure 3, un segment de droite dont les extrémités sont les deux points-images $S'_1$ et $S'_2$.

Pour plus de simplicité, on considérera désormais que l'on se trouve dans le cas de la figure 4, la transposition du mode de la figure 4 à celui de la figure 3 se faisant aisément en remplaçant $C_1$ et $C_2$ par $C_a$ et $C_n$ et $S_1$ et $S_2$ par $S_a$ et $S_n$.

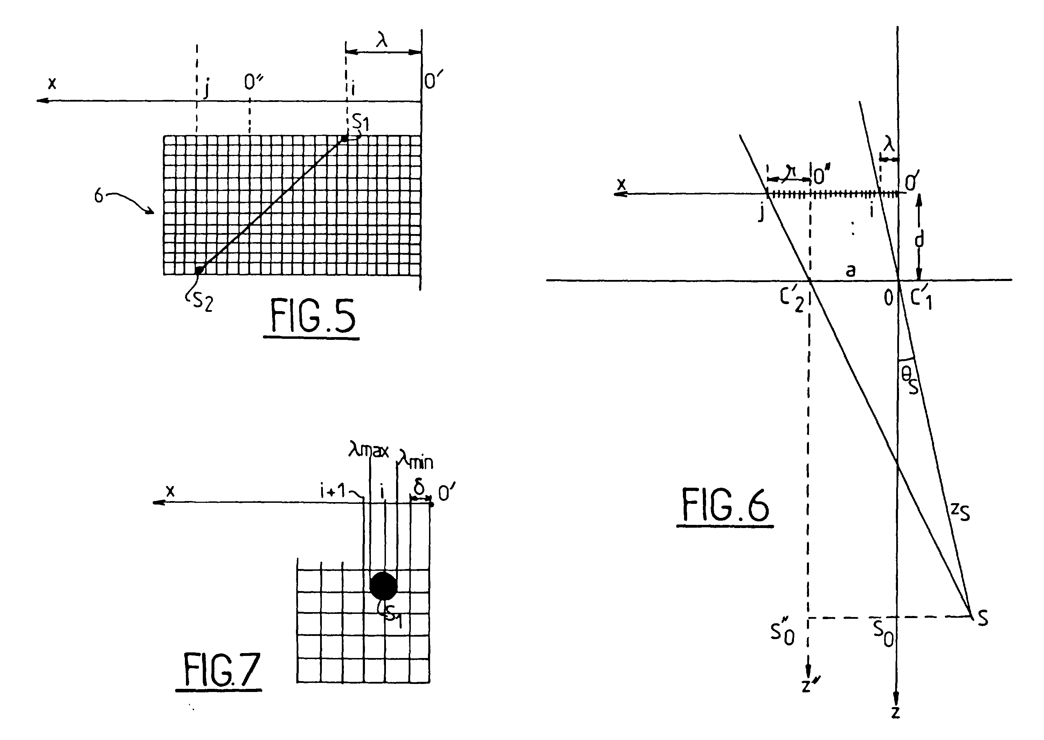

On se reportera maintenant à la figure 5 sur laquelle on a représenté en détail le capteur matriciel 6. Sur un axe de coordonnées O'x, on a repéré par i et j les abscisses relatives par rapport à des origines O', respectivement O'', des extrémités du segment de droite-image du point source S, c'est-à-dire des points-images $S_1$ et $S_2$. Le point O'' est défini ci-après. Les moyens électroniques 7 comportent des algorithmes de traitement d'image (à titre d'exemple non limitatif : extraction de contour suivie d'une transformée de HOUGH) permettant d'extraire parmi les différents

3

segments de droite, le segment de droite relatif à chaque point source. Pour chaque segment de droite, on extrait l'équation de ce segment et donc les abscisses i et j des points $S_1$ et $S_2$.

Sur la figure 6, on a représenté schématiquement le capteur 2 en projection sur un plan perpendiculaire aux plans de la matrice 6 et de la lentille 5'. La projection dans ce plan du capteur matriciel 6 est l'axe O'x et $C'_1$ et $C'_2$ sont les projections des centres optiques $C_1$ et $C_2$. On a désigné par a la distance $C'_1$ $C'_2$ et par d la distance entre les droites $C'_1$ $C'_2$ et O'x, c'est-à-dire la distance entre la lentille et le capteur matriciel. On a considéré que le point O de la figure 2 était confondu avec $C'_1$. On a désigné par $\delta$ la résolution du capteur matriciel 6, c'est-à-dire la distance inter-pixel. On a désigné par $S_o$ la projection du point S sur l'axe Oz, par O" la projection de $C'_2$ sur l'axe O'x, par O"z" un axe parallèle à l'axe O'z et par $S"_o$ la projection de S sur cet axe O"z".

On appelle $\lambda$ et r les distances respectivement à l'axe O'z et O"z" des projections sur l'axe O'x des impacts lumineux que constituent les points-images $S_1$ et $S_2$.

En regardant notamment la figure 7, on peut écrire :

$\delta i < \lambda < \delta (i + 1)$

$\delta j < r < \delta (j + 1)$

$$\lambda = \lambda \text{ moyen} \pm \frac{1}{2} (\lambda \text{ max} - \lambda \text{ min})$$

avec

$$\lambda \text{ moyen} = \frac{\lambda \text{ max} + \lambda \text{ min}}{2} = \frac{\delta(i+1) + \delta i}{2} = \delta \left( i + \frac{1}{2} \right)$$

En considérant que l'impact lumineux a un diamètre d'1 pixel, on peut écrire :

$$\frac{\lambda \text{ max} - \lambda \text{ min}}{2} = \frac{\delta}{2}$$

d'où :

$$\lambda = \delta \left( i + \frac{1}{2} \right) \pm \frac{\delta}{2}$$

On voit d'autre part sur la figure 6 que :

$$\text{tg } \theta_s = \frac{\lambda}{d}$$

donc :

$$\boxed{\text{tg } \theta_s = \frac{\delta}{d} \left( i + \frac{1}{2} \right) \pm \frac{1}{2} \frac{\delta}{d}}$$

On voit encore sur la figure 6, en considérant les triangles $OS_oS$ et OO'i

$$\frac{S_oS}{OS_o} = \frac{O'i}{OO'} \qquad \text{soit} \quad \frac{S_oS}{OS_o} = \frac{\lambda}{d}$$

On voit de même, en considérant les triangles $C'_2 S''_o S$ et $C'_2 O''j$, que :

$$\frac{a + S_oS}{C'_2 S''_o} = \frac{r}{d}$$

d'où

$$r\, C'_2 S''_o = d\, (a + S_oS)$$

Or, on a vu que :

$$\frac{\lambda}{d} = \frac{S_oS}{OS_o} = \frac{S_oS}{C'_2 S''_o}$$

soit

$$\lambda\, C'_2 S''_o = d\, (S_oS)$$

Donc :

$$(r - \lambda)\, C'_2 S''_o = a\, d$$

soit

$$C'_2 S''_o = \frac{ad}{r - \lambda} = \frac{ad}{\delta} \times \frac{\delta}{r - \lambda}$$

Posons :

$$\alpha = \frac{ad}{2\delta}$$

d'où

$$C'_2 S''_o = 2\alpha \left[ \frac{\delta}{r - \lambda} \right]$$

si l'on considère que $C'_2 S''_o$ est à peu près égal à $z_s$ on a :

$$z_s = 2\alpha \left[ \frac{\delta}{r - \lambda} \right]$$

Calculons $z_s \min$ et $z_s \max$ :

$$z_s \min = \frac{2\alpha}{j-i+1} \qquad z_s \max = \frac{2\alpha}{j-i-1}$$

$$z_s \text{ moyen} = \frac{z_s \min + z_s \max}{2} = \frac{2\alpha}{2}\left[\frac{1}{j-i+1} + \frac{1}{j-i-1}\right]$$

$$= \alpha\left[\frac{2(j-i)}{(j-i+1)(j-i-1)}\right]$$

d'où :

$$z_s = z_s \text{ moyen} \pm \frac{z_s \max - z_s \min}{2}$$

$$= 2\alpha\left[\frac{j-i}{(j-i+1)(j-i-1)}\right] \pm \frac{2\alpha}{2}\left[\frac{1}{j-i-1} - \frac{1}{j-i+1}\right]$$

$$= 2\alpha\left[\frac{j-i}{(j-i+1)(j-i-1)}\right] \pm \frac{1}{2}\frac{2}{(j-i+1)(j-i-1)}$$

$$= 2\alpha\left[\frac{j-i}{(j-i+1)(j-i-1)} \pm \frac{1}{(j-i+1)(j-i-1)}\right]$$

En posant :

$$\Delta i = j-i$$

$$\boxed{z_s = \frac{ad}{\delta}\left[\frac{\Delta i}{\Delta i^2-1} \pm \frac{1}{\Delta i^2-1}\right]}$$

L'invention permet de localiser tous les obstacles coupant le plan P ; elle s'applique particulièrement bien à la conduite automobile où la dimension verticale n'est pas très significative et où une dimension sensiblement horizontale suffit, ce qui permet l'utilisation d'un système optique à convergence horizontale tel que la lentille décrite ci-dessus. Elle donne des résultats précis et fiables ; en outre, elle n'utilise qu'un capteur d'images.

L'invention permet de résoudre aisément le problème de mise en correspondance, c'est-à-dire de l'appariement des points images extrêmes ($S_a$ et $S_n$ ou $S_1$ et $S_2$). En effet, l'interéchantillonnage créé par la superposition de lentilles entre les lentilles extrêmes (5a et 5n) ou par la lentille cylindrique inclinée, permet de relier ces points images extrêmes par un segment de droite qu'il est aisé d'extraire au moyen d'un algorithme de traitement d'image (à titre d'exemple non limitatif : extraction de contour suivie d'une transformée de HOUGH).

**Revendications**

1. Dispositif de détection d'obstacles embarqué sur un véhicule automobile, destiné à détecter les obstacles coupant un plan P sensiblement parallèle au plancher du véhicule et passant par ce véhicule, ce dispositif comportant un capteur d'images constitué d'un objectif, d'un capteur matriciel sur lequel se forme une image, et deS moyens de traitement électronique de l'image couplés à des moyens d'information du conducteur du véhicule, caractérisé en ce que le capteur matriciel est situé dans un plan sensiblement perpendiculaire au plan P et au plan de symétrie du véhicule, l'objectif est constitué d'une lentille cylindrique ou d'une portion de lentille cylindrique, dont l'axe est parallèle au plan du capteur matriciel et incliné par rapport au plan de symétrie du véhicule, ce capteur d'images étant placé dans le véhicule de façon que son champ se superpose au plan P, et les moyens de traitement de l'image sont arrangés pour définir dans un repère lié au plan P, les coordonnées de chaque point d'intersection desdits obstacles avec le plan P.

2. Dispositif selon la revendication 1, caractérisé en ce que le capeur d'images est fixé sur la face arrière du rétroviseur intérieur du véhicule et est légèrement incliné vers le bas.

3. Dispositif selon la revendication 1, caractérisé en ce que le capteur d'images est fixé au véhicule au niveau des projecteurs et est légèrement incliné vers le haut.

4. Dipositif selon l'une quelconque des revendications précédentes, caractérisé en ce que la lentille cylindrique est remplacée par une superposition de lentilles ou de portions de lentilles sphériques décalées les unes par rapport aux autres de sorte que leurs centres optiques soient sur un même axe parallèle au plan du capteur matriciel mais incliné par rapport à celui-ci.

5. Dispositif selon l'une quelconque des revendications précédentes, caractérisé en ce que les moyens de traitement électronique déterminent les coordonnées θ et z de chaque point d'intersection des obstacles avec le plan P, l'origine des coordonnées étant située au niveau du capteur, par les relations suivantes :

$$\text{tg}\theta \;=\; -\frac{\delta}{d}\left(i+\frac{1}{2}\right)\pm\frac{1}{2}\frac{\delta}{d}$$

$$=\frac{ad}{\delta}\left[\frac{\Delta i}{\Delta i^2 - 1}\pm\frac{1}{\Delta i^2 - 1}\right]$$

où

- à est la résolution du capteur matriciel
- d est la distance entre l'objectif et le capteur matriciel
- a est la distance entre les projections, sur le plan P, des centres optiques extrêmes de l'objectif
- i est l'abscisse de l'intersection avec la première ligne de la matrice du capteur matriciel du segment de droite qui constitue l'image du point dont les coordonnées sont recherchées, ce segment étant extrait au moyen d'un algorithme de traitement d'image
- $\Delta i = j-i$, j étant l'abscisse de l'intersection avec la dernière ligne de la matrice du capteur matriciel, du segment de droite qui constitue l'image du point dont les coordonnées sont recherchées, ce segment étant extrait au moyen d'un algorithme de traitement d'image.

6. Dispositif selon l'une quelconque des revendications précédentes, caractérisé en ce que les moyens d'information du conducteur sont visuels, et comportent par exemple un écran de visualisation intégré au poste de conduite.

7. Dispositif selon l'une quelconque des revendications précédentes, caractérisé en ce que les moyens d'information du conducteur sont sonores.


**Patentansprüche**

1. In einem Automobil installierte Hinderniserkennungsvorrichtung, die dazu dient, die Hindernisse zu erkennen, die eine Ebene P schneiden, die im wesentlichen parallel zum Fahrzeugboden und durch das Fahrzeug verläuft, wobei die Vorrichtung einen Bildaufnehmer aufweist, der von einem Objektiv, einem Matrixaufnehmer, auf dem sich ein Abbild bildet, und von Einrichtungen zur elektronischen Bildverarbeitung gebildet wird, die mit Einrichtungen zur Unterrichtung des Fahrzeugführers gekoppelt sind, dadurch gekennzeichnet, daß der Matrixaufnehmer im wesentlichen senkrecht zur Ebene P und zur Symmetrieebene des Fahrzeugs angeordnet ist, und das Objektiv von einer Zylinderlinse oder von einem Teil einer Zylinderlinse gebildet wird, deren Achse parallel zur Ebene des Matrixaufnehmers und geneigt in Bezug zu der Symmetrieebene des Fahrzeugs ist, wobei der Bildaufnehmer im Fahrzeug derart angeordnet ist, daß sein Gesichtsfeld sich der Ebene P überlagert und die Bildverarbeitungseinrichtungen eingerichtet sind, um zu einem mit der Ebene P verbundenen Bezugspunkt die Koordinaten von jedem Schnittpunkt der Hindernisse mit der Ebene P zu bestimmen.

2. Vorrichtung nach Anspruch 1, dadurch gekennzeichnet, daß der Bildaufnehmer an der Rückseite des inneren Rückspiegels des Fahrzeugs befestigt ist und leicht nach unten geneigt ist.

3. Vorrichtung nach Anspruch 1, dadurch gekennzeichnet, daß der Bildaufnehmer am Fahrzeug auf der Höhe der Scheinwerfer befestigt ist und leicht nach oben geneigt ist.

4. Vorrichtung nach einem der vorhergehenden Ansprüche, dadurch gekennzeichnet, daß die Zylinderlinse von einer Übereinanderschichtung von Linsen oder von Teilen von Kugellinsen ersetzt wird, die gegeneinander derart versetzt sind, daß deren optische Zentren sich auf einer gleichen Achse befinden, die parallel zur Ebene des Matrixaufnehmers aber schräg in Bezug zu diesem ist.

5. Vorrichtung nach einem der vorhergehenden Ansprüche, dadurch gekennzeichnet, daß die Einrichtungen zur elektronischen Verarbeitung die Koordinaten Θ und z von jedem Schnittpunkt der Hindernisse mit der Ebene P, nach den nachfolgenden Gleichungen bestimmen, wobei der Ursprung der Koordinaten sich beim Aufnehmer befindet:

$$tg\theta = -\frac{\delta}{d}(i + \frac{1}{2}) \pm \frac{1}{2}\frac{\delta}{d}$$

$$z = \frac{ad}{\delta}\left[\frac{\Delta i}{\Delta i^2 - 1} \pm \frac{1}{\Delta i^2 - 1}\right]$$

in denen

- δ die Auflösung des Matrixaufnehmers ist,
- d die Entfernung zwischen dem Objektiv und dem Matrixaufnehmer ist,
- a die Entfernung zwischen den Projektionen in der Ebene P der äußeren optischen Zentren des Objektivs ist,
- i die Abszisse des Schnittpunkts der ersten Reihe der Matrix des Matrixaufnehmers mit dem Geradenstück ist, das das Abbild des Punktes bildet, dessen Koordinaten gesucht werden, wobei dieses Stück mittels eines Algorithmus zur Bildverarbeitung gewonnen wird, und

- Δi = j-i ist, wobei j die Abszisse des Schnittpunkts der letzten Reihe der Matrix des Matrixaufnehmers mit dem Geradenstück ist, das das Abbild des Punktes bildet, dessen Koordinaten gesucht sind, wobei dieses Stück mittels eines Algorithmus zur Bildverarbeitung gewonnen wird.

6. Vorrichtung nach einem der vorhergehenden Ansprüche, dadurch gekennzeichnet, daß die Einrichtungen zur Unterrichtung des Fahrers visuell sind und beispielsweise einen Anzeigebildschirm aufweisen, der im Führerplatz integriert ist.

7. Vorrichtung nach einem der vorhergehenden Ansprüche, dadurch gekennzeichnet, daß die Einrichtungen zur Unterrichtung des Fahrers akustisch sind.

## Claims

1. Obstacle-detection device on board a motor vehicle, intended to detect obstacles intersecting a plane P substantially parallel to the floor of the vehicle and passing through this vehicle, this device comprising an image sensor constituted by an objective, a matrix-type sensor on which an image is formed, and means for electronically processing the image, coupled with means for informing the driver of the vehicle, characterised in that
the matrix-type sensor is located in a plane substantially perpendicular to the plane P and to the plane of symmetry of the vehicle, the objective is constituted by a cylindrical lens or a portion of cylindrical lens, the axis of which is parallel to the plane of the matrix-type sensor and inclined with respect to the plane of symmetry of the vehicle, this image sensor being placed inside the vehicle so that its field is superimposed on the plane P, and the image-processing means are arranged so as to define, within a reference point connected to the plane P, the co-ordinates of each point of intersection of said obstacles with the plane P.

2. Device according to Claim 1,
characterised in that the image sensor is fixed to the rear face of the internal rear-view mirror of the vehicle and is slightly inclined downwards.

3. Device according to Claim 1,
characterised in that the image sensor is fixed to the vehicle at the level of the projectors and is slightly inclined upwards.

4. Device according to any one of the preceding claims,
characterised in that the cylindrical lens is replaced by a superimposition of lenses or portions of spherical lenses offset from one another so that their optical centres are on the same axis parallel to the plane of the matrix-type sensor but inclined with respect thereto.

5. Device according to any one of the preceding claims,
characterised in that the electronic processing means determine the co-ordinates $\theta$ and $z$ of each point of intersection of the obstacles with the plane P, the origin of the co-ordinates being located level with the sensor, by the following relationships:

$$\text{tg}\theta = - \frac{\delta}{d} \left( i + \frac{1}{2} \right) \pm \frac{1}{2} \frac{\delta}{d}$$

$$z = \frac{ad}{\delta} \left[ \frac{\Delta i}{\Delta l^2 - 1} \pm \frac{1}{\Delta i^2 - 1} \right]$$

where

- $\delta$ is the resolution of the matrix-type sensor

- $d$ is the distance between the objective and the matrix-type sensor

- a is the distance between the projections, on the plane P, of the extreme optical centres of the objective

- i is the abscissa of the intersection with the first line of the matrix of the matrix-type sensor of the segment of straight line that constitutes the image of the point, the co-ordinates of which are sought, this segment being extracted by means of an image-processing algorithm

- $\Delta i = j - i$, j being the abscissa of the intersection with the last line of the matrix of the matrix-type sensor, of the segment of straight line that constitutes the image of the point, the co-ordinates for which are sought, this segment being extracted by means of an image-processing algorithm.

6. Device according to any one of the preceding claims,
   characterised in that the means for informing the driver are visual, and comprise for example a display screen integrated into the driving station.

7. Device according to any one of the preceding claims,
   characterised in that the means for informing the driver are sound-based.

FIG.1

FIG.2

EP 0 617 296 B1

FIG.3

FIG.4

FIG.5

FIG.6

FIG.7

EP 0 617 296 B1